# EUROPEAN PATENT SPECIFICATION

(11) **EP 3 970 962 B1**
(45) Date of publication and mention of the grant of the patent: **08.04.2026**
(21) Application number: 20809394.8
(22) Date of filing: 07.05.2020
(51) Int. Cl.: B32B 5/10, B32B 27/12, B32B 27/20, B32B 27/32, B29C 43/18, B29C 70/02, B29C 70/34, B29C 70/40, B29C 43/00, B29C 43/50, B29C 70/12, B32B 5/26, B32B 27/28, B32B 27/34, B32B 27/36, B32B 5/02, B32B 27/30, B29C 70/50, B29C 43/20, B29K 101/12

(54) **COMPOSITE LAMINATE AND METHOD FOR PRODUCING SAME**
VERBUNDLAMINAT UND VERFAHREN ZUR HERSTELLUNG DAVON
STRATIFIÉ COMPOSITE ET SON PROCÉDÉ DE PRODUCTION

(30) Priority: 17.05.2019 JP 2019093348; 18.09.2019 JP 2019169014
(43) Date of publication of application: 23.03.2022
(73) Proprietor: Otsuka Chemical Co., Ltd., Osaka-shi, Osaka 540-0021 (JP)
(72) Inventor: YAGI, Hiroshi, Tokushima-shi, Tokushima 771-0193 (JP)
(74) Representative: Ter Meer Steinmeister & Partner
(86) International application number: PCT/JP2020/018510
(87) International publication number: WO 2020/235343

(56) References cited:
- EP-A1- 2 902 435
- WO-A1-2019/111737
- JP-A- 2012 077 223
- JP-A- 2012 188 670
- JP-A- 2015 127 141
- JP-A- 2016 037 598
- JP-A- 2016 094 608
- JP-A- 2016 107 485
- JP-A- H08 283 494
- US-A1- 2011 291 056

## Description

### Technical Field

The present invention relates to fiber-reinforced composite laminates and methods for producing the composite laminates.

### Background Art

Fiber-reinforced resin is lightweight and strong and is therefore used as a material to replace metal in various fields, including golf clubs, tennis rackets, aircraft, and motor vehicles. Particularly, because of recent demands for weight saving of motor vehicles to achieve low fuel consumption, fiber-reinforced resin has attracted attention in the motor vehicle field. However, there are various problems to be solved in order to use fiber-reinforced resin for motor vehicle members. For example, fiber-reinforced resin comprised of thermosetting resin needs to be thermally treated (undergo a curing reaction) after being molded, which prevents achievement of high productivity and low cost essential for the production of motor vehicle members. Therefore, there are demands for fiber-reinforced thermoplastic resin (hereinafter, referred to also as "FRTP") in which thermoplastic resin, which is easily moldable, is used in place of thermosetting resin.

As a method for molding FRTP, stamping molding is commonly performed in which sheets made of continuous fibers impregnated with a thermoplastic resin are stacked one upon another and heat and pressure are applied to the stack with a press or the like to give the stack a desired shape. Because of the use of continuous fibers, members obtained in this manner can be designed to have good mechano-physical properties and they exhibit less variations in mechano-physical properties. However, because the fibers used are continuous fibers, FRTP is difficult to form into a complicated shape, such as a three-dimensional shape, and is limited mainly to the use for members having a flat shape or shapes like that. To cope with this, Patent Literature 1 proposes that, by making incisions in prepregs made of continuous fibers and a thermoplastic resin, the prepregs can be molded in a short time, exhibit good shapability during molding, and can develop good mechano-physical properties when produced as an FRTP member. Patent Literature 2 proposes the use of prepregs containing non-continuous fibers and thermoplastic fibers (what is called prepreg is a semi-cured, sheet-shaped preform material made of continuous or non-continuous reinforced fibers impregnated with a thermosetting resin or a thermoplastic resin). However, in Patent Literatures 1 and **2,** there arises a problem that when prepregs are stacked to make an FRTP, a layered base material sticks to a belt or a mold of a molding machine, which prevents stable production of an FRTP member.

The use of a mold release agent is known as a method for preventing the sticking of material to the mold of a molding machine, but the transfer of the mold release agent to the surface of an FRTP member may deteriorate the surface quality (cause poor appearance) of the FRTP member. To avoid this, a release film may be used. However, the use of a release film interferes with heat conduction from the heated or cooled mold to the layered base material. If the heat conduction from the mold to the layered base material is interfered with, melting or solidification by cooling of the thermoplastic resin becomes insufficient, so that the resultant FRTP member has low mechano-physical properties, including strength and rigidity. If, in order to solve this problem, the temperature of the mold is excessively increased or decreased, the mold repeats contraction and expansion and, in turn, may be damaged.

FRTP members for motor vehicle exterior parts are members depending largely on visual impressions and feelings of users and, therefore, an FRTP member having a poor surface quality significantly reduces its commercial value. For this reason, FRTP members for motor vehicle exterior parts are required to have not only good mechano-physical properties and moldability but also good surface appearance. As solutions, Patent Literature 3 proposes to limit the thickness of a release film to not more than 10 times the thickness of a prepreg or use plates treated with a mold release agent. EP 2 902 435 A1 relates to a prepreg comprising: a primary prepreg composed of reinforcing fibers and a resin composition (I) impregnating the interior of a reinforcing fiber layer formed from these fibers; and a surface layer composed of a resin composition (II) formed on one or both sides of the primary prepreg; wherein the resin composition (I) is an epoxy resin composition [B] containing at least an epoxy resin and a thermoplastic resin, and the resin composition (II) is an epoxy resin composition [A] containing at least an epoxy resin and conductive particles. Citation List

### Patent Literature

Patent Literature 1: JP-A-2009-286817
Patent Literature 2: JP-A-2010-235779
Patent Literature 3: JP-A-2015-51629

### Summary of Invention

### Technical Problem

However, Patent Literature 3 does not propose any technique for stably producing an FRTP member having good surface appearance and good quality, without a technique of using a release film or the like. Furthermore, Patent Literature 3 does not also propose any method for simultaneously increasing the mechano-physical properties, including strength and rigidity, of an FRTP member.

An object of the present invention is to provide: a composite laminate having excellent releasability from a mold during a production process and excellent surface appearance (surface smoothness) and mechano-physical properties; and a method for producing the composite laminate.

### Solution to Problem

The present invention provides a composite laminate according to claim 1 and a method for producing the same according to claim 11.

### Advantageous Effects of Invention

The present invention enables provision of: a composite laminate having excellent releasability from a mold during a production process and excellent surface appearance (surface smoothness) and mechano-physical properties; and a method for producing the composite laminate.

### Brief Description of Drawings

[Fig. 1] Fig. 1 is a schematic cross-sectional view showing a composite laminate according to a first embodiment of the present invention.
[Fig. 2] Fig. 2 is a schematic cross-sectional view showing a composite laminate according to a second embodiment of the present invention.

### Description of Embodiments

Hereinafter, a description will be given of preferred embodiments. However, the following embodiments are merely illustrative and the present invention is not limited to the following embodiments. Throughout the drawings, members having substantially the same functions may be referred to by the same reference numerals.

A composite laminate according to the present invention includes an A layer and a B layer, wherein the A layer is provided directly or indirectly on one or both sides of the B layer. The A layer is preferably provided directly on one or both sides of the B layer. However, the A layer may be provided through another layer on one or both sides of the B layer. In this case, it is sufficient that the other layer is a layer different from the A layer and the B layer.

The A layer contains: spherical particles (a1) having a volume mean particle diameter of 0.01 µm to 100 µm; and a thermoplastic resin (a2). On the other hand, the B layer contains: reinforcing fibers (b1) having an average fiber length of 1 mm or more; and a thermoplastic resin (b2).

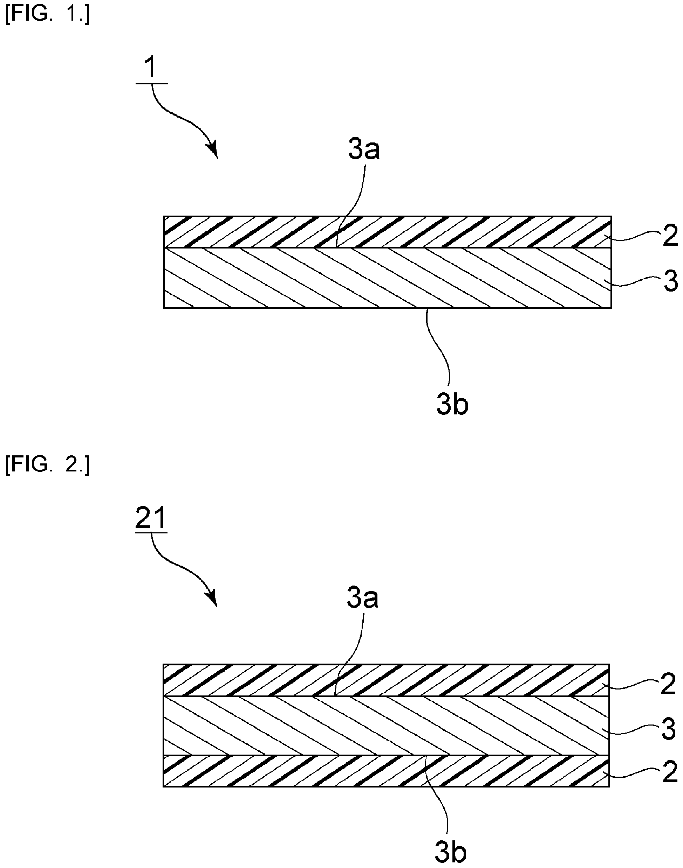

More specifically, Fig. 1 is a schematic cross-sectional view showing a composite laminate according to a first embodiment of the present invention. As shown in Fig. 1, the composite laminate 1 includes an A layer 2 as a first layer and a B layer 3 as a second layer. The B layer 3 has a first principal surface 3a and a second principal surface 3b opposed to each other. The A layer 2 is provided on the first principal surface 3a of the B layer 3. The A layer 2 is formed of a film (a3) containing: the spherical particles (a1), and the thermoplastic resin (a2). The B layer 3 is formed of a sheet (b3) containing: the reinforcing fibers (b1); and the thermoplastic resin (b2). The film (a3) and the sheet (b3) are integrated together. Specifically, for example, as explained in a production method to be described hereinafter, they are integrated together by disposing the film (a3) on one or both sides of the sheet (b3) to form a layered stack of the film (a3) and the sheet (b3) and applying heat and pressure to the layered stack.

Fig. 2 is a schematic cross-sectional view showing a composite laminate according to a second embodiment of the present invention. As shown in Fig. 2, in the composite laminate 21, an A layer 2 is further provided on the second principal surface 3b of the B layer 3. As for the rest, the second embodiment is designed in the same way as the first embodiment.

As shown in the first embodiment and the second embodiment, in the composite laminate according to the present invention, the A layer may be provided only on one side of the B layer or may be provided on both sides of the B layer.

A description will be given below of components and so on of the composite laminate according to the present invention.

### <A layer>

The A layer being a component of the composite laminate according to the present invention is formed of a film (a3) containing: spherical particles (a1) having a volume mean particle diameter of 0.01 µm to 100 µm; and a thermoplastic resin (a2). The A layer exists on one or both sides of the B layer to be described hereinafter. Since the A layer exists as a front layer, a back layer or front and back layers of the composite laminate, the composite laminate has excellent mold releasability during molding and excellent surface smoothness and mechano-physical properties.

The thickness of the A layer is preferably smaller than the thickness of the B layer, more preferably less than 500 µm, still more preferably 30 µm to 450 µm, particularly preferably 50 µm to 300 µm, and most preferably 100 µm to 200 µm. If the thickness of the A layer is too large, the content of reinforcing fibers (b1) in the composite laminate decreases, so that the strength may decrease. In contrast, since the thickness of the A layer is smaller than the thickness of the B layer, the mechano-physical properties of the B layer can be maximized, so that a composite laminate having more excellent mechano-physical properties can be obtained. Note that the thickness of the A layer in the case where the A layers exist on both sides of the B layer refers to a total of the thicknesses of both the A layers.

The thickness ratio between the A layer and the B layer (A layer/B layer) is preferably not less than 0.01, more preferably not less than 0.05, preferably not more than 0.50, and more preferably not more than 0.30.

### (Spherical Particles (a1))

The spherical particles (a1) for use in the film (a3) are at least one material selected from the group consisting of silica, alumina, and glass beads.

The term "spherical" herein includes not only a true spherical shape but also approximately spherical shapes, such as an oval spherical shape, and these spherical shapes with surface asperities. The aspect ratio (the ratio of the length to the breadth) of the spherical silica is, for example, preferably 2 or less and more preferably 1.5 or less. The aspect ratio can be determined as a value obtained by observing the shapes of arbitrary 50 particles with a scanning electron microscope (SEM) and averaging the aspect ratios of these particles.

Silica used herein not only refers to narrow defined silicon dioxide, but also to a silicate-based filler, and can be appropriately selected from among materials conventionally used as a filler for resin. However, it is preferably amorphous silica.

Examples of amorphous silica include dry silica (anhydrous silica) and wet silica (hydrous silicic acid). Dry silica can be obtained, for example, by a combustion method in which silicon tetrachloride is burned in a flame of oxygen and hydrogen. Wet silica can be obtained, for example, by a precipitation method or gel method in which sodium silicate is neutralized with an inorganic acid, or a sol-gel method in which alkoxysilane is hydrolyzed.

The volume mean particle diameter of the spherical particles (a1) is 0.01 µm to 100 µm, preferably 0.01 µm to 10 µm, more preferably 0.05 µm to 6 µm, still more preferably 0.1 µm to 4 µm, and particularly preferably 0.3 µm to 2 µm. By defining the volume mean particle diameter within the above range, the composite laminate can be increased in surface smoothness without decreasing its mechano-physical properties.

The volume mean particle diameter refers to, when a cumulative frequency distribution curve of particle diameters is determined with the total volume of the particles as 100%, a particle diameter at a point corresponding to a 50% cumulative volume. The cumulative frequency distribution curve can be measured, for example, with a particle size distribution measurement device using the laser diffraction and scattering method.

The specific surface area (by the BET method) of the spherical particles (a1) is preferably 1 m²/g to 30 m²/g, more preferably 2 m²/g to 20 m²/g, and still more preferably 3 m²/g to 10 m²/g.

The specific surface area (by the BET method) can be measured in conformity with JIS Z8830. The BET method refers to a method of adsorbing, on the surface of a sample powder particle, nitrogen gas whose occupied area has already been known and determining the specific surface area of the sample powder particle from the amount of nitrogen gas adsorbed thereon, and the specific surface area determined by this method is referred to as the "BET specific surface area".

Regarding the spherical particles (a1), in order to increase the wettability with the thermoplastic resin (a2) and further improve physical properties, such as mechano-physical properties, of an obtained resin composition, treated layers made of a surface treatment agent may be formed on the surfaces of spherical particles (a1) for use in the present invention.

Examples of the surface treatment agent include silane coupling agents and titanium coupling agents. Preferred among them are silane coupling agents and more preferred are aminosilane coupling agents, epoxysilane coupling agents, and alkylsilane coupling agents. These surface treatment agents may be used alone or as a mixture of two or more thereof.

Examples of the aminosilane coupling agents include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-ethoxysilyl-N-(1,3-dimethylbutylidene)propylamine, N-phenyl-3-aminopropyltrimethoxysilane, and N-(vinylbenzyl)-2-aminoethyl-3-aminopropyltrimethoxysilane.

Examples of the epoxysilane coupling agents include 3-glycidyloxypropyl(dimethoxy)methylsilane, 3-glycidyloxypropyltrimethoxysilane, diethoxy(3-glycidyloxypropyl)methylsilane, triethoxy(3-glycidyloxypropyl)silane, and 2-(3,4-epoxycyclohexyl)ethyltrimethoxysilane.

Examples of the alkylsilane coupling agents include methyltrimethoxysilane, dimethyldimethoxysilane, trimethylmethoxysilane, methyltriethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, and n-decyltrimethoxysilane.

Known surface treatment methods can be used as the method for forming treated layers made of a surface treatment agent on the surfaces of the spherical particles (a1) and examples include: a wet method of dissolving the surface treatment agent in a solvent promoting hydrolysis (for example, water, an alcohol or a mixed solvent of them) to prepare a solution and spraying the solution on the spherical particles (a1); and an integral blend method of blending the spherical particles (a1) and the surface treatment agent with a resin composition.

There is no particular limitation as to the amount of surface treatment agent in treating the surfaces of the spherical particles (a1) for use in the present invention with the surface treatment agent, but, in the wet method, the solution of the surface treatment agent may be sprayed so that the amount of surface treatment agent reaches, for example, 0.1 parts by mass to 20 parts by mass relative to 100 parts by mass of spherical particles (a1). On the other hand, in the integral blend method, the surface treatment agent may be blended with the resin composition so that the amount of surface treatment agent reaches preferably 1 part by mass to 50 parts by mass and more preferably 10 parts by mass to 40 parts by mass, relative to 100 parts by mass of spherical particles (a1). When the amount of surface treatment agent is within the above ranges, the adhesion of the spherical particles (a1) to the thermoplastic resin (a2) can be further increased and the dispersibility of the spherical particles (a1) can be further increased.

The content of the spherical particles (a1) is, in a total amount of 100% by mass of all components contained in the film (a3), preferably 0.5% by mass to 30% by mass, more preferably 1% by mass to 20% by mass, and still more preferably 3% by mass to 15% by mass.

By defining the content of the spherical particles (a1) within the above range, the composite laminate can be further increased in mechano-physical properties without decreasing the formability of a film to be described hereinafter.

### (Thermoplastic Resin (a2))

There is no particular limitation as to the type of the thermoplastic resin (a2) for use in the film (a3) so long as it is a thermoplastic resin that can be formed into a film. Examples include: polyolefin resins, such as polypropylene (PP) resin, polyethylene (PE) resin, cyclic polyolefin (COP) resin, and cyclic olefin copolymer (COC) resin; polystyrene-based resins, such as polystyrene (PS) resin, syndiotactic polystyrene (SPS) resin, high-impact polystyrene (HIPS) resin, acrylonitrile-butylene-styrene copolymer (ABS) resin, methyl methacrylate-styrene copolymer (MS), methyl methacrylate-styrene-butadiene copolymer (MBS), styrene-butadiene copolymer (SBR), styrene-isoprene copolymer (SIR), styrene-isoprene-butadiene copolymer (SIBR), styrene-butadiene-styrene copolymer (SBS), styrene-isoprene-styrene copolymer (SIS), styrene-ethylene-butylene-styrene copolymer (SEBS), and styrene-ethylene-propylene-styrene copolymer (SEPS); polyester-based resins, such as polylactic (PLA) resin, polyethylene terephthalate (PET) resin, polybutylene terephthalate (PBT) resin, and polycyclohexylenedimethylene terephthalate (PCT) resin; polyacetal (POM) resin; polycarbonate (PC) resin; aliphatic polyamide (PA) resins, such as polyamide 6 resin, polyamide 66 resin, polyamide 11 resin, polyamide 12 resin, polyamide 46 resin, polyamide 6C resin, polyamide 9C resin, polyamide 6 resin-polyamide 66 resin copolymer (polyamide 6/66 resin), and polyamide 6 resin-polyamide 12 resin copolymer (polyamide 6/12 resin); semi-aromatic polyamide (PA) resins composed of a structural unit with an aromatic ring and a structural unit free from aromatic ring, such as polyamide MXD6 resin, polyamide MXD10 resin, polyamide 6T resin, polyamide 9T resin, and polyamide 10T resin; polyphenylene sulfide (PPS) resin; polyether sulfone (PES) resin; liquid crystal polyester (LCP) resin; aromatic polyether ketone resins, such as polyether ketone (PEK) resin, polyether ether ketone (PEEK) resin, polyether ketone ketone (PEKK) resin, and polyether ether ketone ketone (PEEKK) resin; polyether imide (PEI) resin; polyamide-imide (PAI) resin; thermoplastic polyimide (TPI) resin; and fluororesins, such as polyvinylidene fluoride (PVDF), polyvinyl fluoride (PVF), and ethylene-tetrafluoroethylene copolymer (ETFE). Mixtures of at least two compatible thermoplastic resins selected from among the above thermoplastic resins, i.e., polymer alloys, or the like can also be used.

Among them, the preferred thermoplastic resin (a2) is at least one selected from the group consisting of polyolefin resin, polystyrene-based resin, polyester-based resin, aliphatic polyamide (PA) resin, semi-aromatic polyamide (PA) resin, polyphenylene sulfide (PPS) resin, polyether sulfone (PES) resin, aromatic polyether ketone resin, polyether imide (PEI) resin, and thermoplastic polyimide (TPI) resin.

In view of further increasing the adhesion to the B layer, the thermoplastic resin (a2) is preferably of the same type as the thermoplastic resin (b2) to be described hereinafter. For example, when the thermoplastic resin (b2) is aliphatic polyamide (PA), the thermoplastic resin (a2) is preferably aliphatic polyamide (PA) resin or semi-aromatic polyamide (PA).

There is no particular limitation as to the form of the thermoplastic resin (a2) so long as it can be melt-kneaded. For example, any one of powdered, granular, and pelletized forms can be used.

The content of the thermoplastic resin (a2) is, in a total amount of 100% by mass of all components contained in the film (a3), preferably 70% by mass to 99.5% by mass, more preferably 80% by mass to 99% by mass, and still more preferably 85% by mass to 97% by mass.

### (Other Additives)

The film (a3) may contain other additives without impairing its preferred physical properties. Examples of the other additives include: a filler, such as aramid fibers, polyphenylene benzoxazole (PBO) fibers, glass fibers, carbon fibers, alumina fibers, boron fibers, silicon carbide fibers, potassium titanate fibers, wollastonite fibers, calcium carbonate, mica, sericite, illite, talc, kaolinite, montmorillonite, boehmite, smectite, vermiculite, titanium dioxide, potassium titanate, potassium lithium titanate or boehmite; a solid lubricant, such as polytetrafluoroethylene (PTFE), low-density polyethylene, linear low-density polyethylene, medium-density polyethylene, high-density polyethylene, ultra-high molecular weight polyethylene or other polyolefin resins, graphite, molybdenum disulfide, tungsten disulfide or boron nitride; a thermal stabilizer, such as copper compounds; a light stabilizer, such as hindered phenol-based light stabilizer; a nucleating agent; an antistat, such as anionic antistat, cationic antistat or non-ionic antistat; an anti-aging agent (antioxidant); a weatherproofer; a light-resistant agent; a metal deactivator; a ultraviolet ray absorber, such as benzophenone-based ultraviolet ray absorber, benzotriazole-based ultraviolet ray absorber, triazine-based ultraviolet ray absorber or salicylate-based ultraviolet ray absorber; a germ- and mildew-proofing agent; a deodorant; a conductive additive, such as carbon-based conductive additive, metal-based conductive additive, metal oxide-based conductive additive or surfactant; a dispersant; a softener (plasticizer), such as polyester-based plasticizer, glycerin-based plasticizer, polycarboxylic acid ester-based plasticizer, phosphoric acid ester-based plasticizer, polyalkylene glycol-based plasticizer or epoxy-based plasticizer; a colorant, such as carbon black, titanium oxide or other pigments, or dye; a flame retardant, such as phosphazene-based compound, phosphoric acid ester, condensed phosphoric acid ester, inorganic phosphorous flame retardant, halogen-based flame retardant, silicone-based flame retardant, metal oxide-based flame retardant, metal hydroxide-based flame retardant, organometallic salt-based flame retardant, nitrogen-based flame retardant or boron compound-based flame retardant; an antidripping agent; a sound deadener; a neutralizer; an antiblocking agent; a flow modifier; a mold release agent, such as fatty acid or metal salt of fatty acid; a lubricant, and an impact resistance improver. The film (a3) may contain at least one of these additives.

When the film (a3) contains the other additives, the content of them is not particularly limited without impairing the preferred physical properties of the present invention and is, in a total amount of 100% by mass of all components contained in the film (a3), preferably 5% by mass or less, and more preferably 1% by mass or less.

### (Method for Producing A Layer)

The composite laminate according to the present invention can be obtained, as will be described hereinafter, by making each of a film (a3) forming the A layer and a sheet (b3) forming the B layer, disposing the film (a3) on one or both sides of the sheet (b3) to form a layered stack of the film (a3) and the sheet (b3), and applying heat and pressure to the obtained stack with a molding machine to integrate the film (a3) and the sheet (b3).

There is no particular limitation as to the method for producing the film (a3) forming the A layer. For example, known melting and film formation methods, such as T-die casting, calendering, and pressing, can be used.

More specifically, examples include: a method of directly mixing the spherical particles (a1), the thermoplastic resin (a2), and, if necessary, other additives to give the above respective contents and melting them to form a film; and a method of previously melt-kneading the spherical particles (a1), the thermoplastic resin (a2), and, if necessary, other additives to give the above respective contents, making pellets of the mixture, and using the pellets to melt them and form a film.

Either a stretched film or an unstretched film may be used as the film (3a), but the stretched film is preferred because its contraction during melting by the application of heat prevents the occurrence of wrinkling and loosening to further improve the appearance of a molded article. The stretch ratio is preferably 2 to 15. The stretch ratio in the present invention refers to the area ratio obtained by multiplying, with reference to the dimensions of a film exiting from a casting roll during film formation, its horizontal stretch ratio by its vertical stretch ratio.

The thickness of the film (a3) forming the A layer before the production of the composite laminate according to the present invention is preferably less than 500 µm, more preferably 30 µm to 450 µm, still more preferably 50 µm to 300 µm, and most preferably 100 µm to 200 µm. When the thickness of the film (a3) forming the A layer is less than 500 µm, the surface smoothness of the composite laminate obtained by stamping molding can be further increased without impairing the mechano-physical properties of the composite laminate.

### <B Layer>

The B layer forming a component of the composite laminate according to the present invention is a layer formed of a sheet (b3) containing reinforcing fibers (b1) with an average fiber length of 1 mm or more and a thermoplastic resin (b2), and the B layer is a core layer of the composite laminate. When the average fiber length of the reinforcing fibers (b1) is 1 mm or more, a composite laminate having excellent mechano-physical properties can be obtained.

The thickness of the B layer can be arbitrarily selected depending on the shape of a desired member and is, in view of mechano-physical properties, preferably 0.3 mm to 15 mm, more preferably 1 mm to 10 mm, and still more preferably 1.5 mm to 5 mm.

### (Reinforcing Fibers (b1))

There is no particular limitation as to the type of the reinforcing fibers (b1) for use in the sheet (b3) so long as their average fiber length is 1 mm or more, and examples that can be used include inorganic fibers, organic fibers, metallic fibers or any combination of two or more of these types of fibers. Examples of the inorganic fibers include carbon fibers, graphite fibers, silicon carbide fibers, alumina fibers, tungsten carbide fibers, boron fibers, and glass fibers. Examples of the organic fibers include aramid fibers, polyparaphenylene benzoxazole (PBO) fibers, high-density polyethylene fibers, other types of common polyamide fibers, and polyester. Examples of the metallic fibers include stainless fibers and iron fibers and metal-coated carbon fibers may also be used. Preferred among them are at least one type of fibers selected from the group consisting of carbon fibers, glass fibers, and aramid fibers. From the viewpoint of further increasing the mechano-physical properties, such as strength, of a final molded product, carbon fibers are more preferred. Carbon fibers are fibers produced by carbonizing acrylic fibers or pitch (a by-product of oil, coal, coal tar or the like) as a raw material at high temperatures and are defined in the Japanese Industrial Standards as fibers which are obtained by carbonizing a precursor of organic fibers by heat and 90% or more of the mass of which is made of carbon. Carbon fibers produced with the use of acrylic fibers are referred to as PAN-based carbon fibers, and carbon fibers produced with the use of pitch are referred to as pitch-based carbon fibers.

Regarding the reinforcing fibers (b1), an excessively long fiber length may decrease the fluidity during stamping molding, whereas an excessively short fiber length may make it difficult to skim the reinforcing fibers. Therefore, from the viewpoint of further increasing moldability, the reinforcing fibers (b1) are preferably non-continuous fibers and their average fiber length is more preferably 1 mm to 100 mm and still more preferably 2 mm to 50 mm. The average fiber diameter of the reinforcing fibers (b1) is preferably 1 µm to 50 µm and more preferably 5 µm to 20 µm. The reinforcing fibers (b1) may be in the form of bundles bundled with a sizing agent or the like so long as they have the above-mentioned average fiber diameter.

The content of the reinforcing fibers (b1) is, in a total amount of 100% by mass of all components contained in the sheet (b3), preferably 10% by mass to 80% by mass, more preferably 20% by mass to 70% by mass, and still more preferably 30% by mass to 60% by mass.

When the content of the reinforcing fibers (b1) is not less than 10% by mass, a further reinforcing effect of the fibers can be obtained. When the content of the reinforcing fibers (b1) is not more than 80% by mass, the productivity of a sheet to be described hereinafter can be further increased.

### (Thermoplastic Resin (b2))

There is no particular limitation as to the type of the thermoplastic resin (b2) for use in the sheet (b3) so long as it is a thermoplastic resin that can be formed into fibers or a film. Examples include: polyolefin resins, such as polypropylene (PP) resin, polyethylene (PE) resin, cyclic polyolefin (COP) resin, and cyclic olefin copolymer (COC) resin; polystyrene-based resins, such as polystyrene (PS) resin, syndiotactic polystyrene (SPS) resin, high-impact polystyrene (HIPS) resin, acrylonitrile-butylene-styrene copolymer (ABS) resin, methyl methacrylate-styrene copolymer (MS), methyl methacrylate-styrene-butadiene copolymer (MBS), styrene-butadiene copolymer (SBR), styrene-isoprene copolymer (SIR), styrene-isoprene-butadiene copolymer (SIBR), styrene-butadiene-styrene copolymer (SBS), styrene-isoprene-styrene copolymer (SIS), styrene-ethylene-butylene-styrene copolymer (SEBS), and styrene-ethylene-propylene-styrene copolymer (SEPS); polyester-based resins, such as polylactic (PLA) resin, polyethylene terephthalate (PET) resin, polybutylene terephthalate (PBT) resin, and polycyclohexylenedimethylene terephthalate (PCT) resin; polyacetal (POM) resin; polycarbonate (PC) resin; aliphatic polyamide (PA) resins, such as polyamide 6 resin, polyamide 66 resin, polyamide 11 resin, polyamide 12 resin, polyamide 46 resin, polyamide 6C resin, polyamide 9C resin, polyamide 6 resin-polyamide 66 resin copolymer (polyamide 6/66 resin), and polyamide 6 resin-polyamide 12 resin copolymer (polyamide 6/12 resin); semi-aromatic polyamide (PA) resins composed of a structural unit with an aromatic ring and a structural unit free from aromatic ring, such as polyamide MXD6 resin, polyamide MXD10 resin, polyamide 6T resin, polyamide 9T resin, and polyamide 10T resin; polyphenylene sulfide (PPS) resin; polyether sulfone (PES) resin; liquid crystal polyester (LCP) resin; aromatic polyether ketone resins, such as polyether ketone (PEK) resin, polyether ether ketone (PEEK) resin, polyether ketone ketone (PEKK) resin, and polyether ether ketone ketone (PEEKK) resin; polyether imide (PEI) resin; polyamide-imide (PAI) resin; thermoplastic polyimide (TPI) resin; and fluororesins, such as polyvinylidene fluoride (PVDF), polyvinyl fluoride (PVF), and ethylene-tetrafluoroethylene copolymer (ETFE). Mixtures of at least two compatible thermoplastic resins selected from among the above thermoplastic resins, i.e., polymer alloys, or the like can also be used.

Among them, the preferred thermoplastic resin (b2) is at least one selected from the group consisting of polyolefin resin, polystyrene-based resin, polyester-based resin, aliphatic polyamide (PA) resin, semi-aromatic polyamide (PA) resin, polyphenylene sulfide (PPS) resin, polyether sulfone (PES) resin, aromatic polyether ketone resin, polyether imide (PEI) resin, and thermoplastic polyimide (TPI) resin.

There is no particular limitation as to the form of the thermoplastic resin (b2) so long as it can be melt-kneaded. For example, any one of powdered, granular, and pelletized forms can be used.

The content of the thermoplastic resin (b2) is, in a total amount of 100% by mass of all components contained in the sheet (b3), preferably 20% by mass to 90% by mass, more preferably 30% by mass to 80% by mass, and still more preferably 40% by mass to 70% by mass.

The weight per unit area of the sheet (b3) is preferably 100 g/m² to 1500 g/m² in view of smooth molding of a composite laminate according to the present invention.

### (Method for Producing B Layer)

The composite laminate according to the present invention can be obtained by making each of a film (a3) forming the A layer and a sheet (b3) forming the B layer, disposing the film (a3) on one or both sides of the sheet (b3) to form a layered stack of the film (a3) and the sheet (b3), and applying heat and pressure to the obtained stack with a molding machine to integrate the film (a3) and the sheet (b3).

The sheet (b3) forming the B layer can be obtained by stacking a plurality of prepregs made of the reinforcing fibers (b1) impregnated with the thermoplastic resin (b2) to give the above-mentioned respective contents, thus forming a stack, and applying heat and pressure to the obtained stack with a molding machine to integrate the prepregs. Alternatively, a prepreg made of the reinforcing fibers (b1) impregnated with the thermoplastic resin (b2) may be used as it is. In other words, a prepreg made of the reinforcing fibers (b1) impregnated with the thermoplastic resin (b2) may be used directly as the sheet (b3).

An example of a method for producing a prepreg is a method of preparing two sheets of thermoplastic resin (b2), such as films, pieces of non-woven fabric, mats, pieces of woven fabric or pieces of knit fabric, sandwiching between the two sheets a sheet made of reinforcing fibers (b1) aligned in a sheet from or a sheet obtained by cutting the reinforcing fibers (b2) and making them into a sheet (non-woven material) by a paper making method, and applying heat and pressure to the stacked sheets. More specifically, while two sheets of thermoplastic resin are fed from two rolls feeding different sheets of thermoplastic resin, a single sheet of reinforcing fibers fed from a roll for a sheet of reinforcing fibers is inserted between the two sheets of thermoplastic resin. Thereafter, heat and pressure are applied to the stack of the sheets. Any known apparatus for applying heat and pressure can be used and apparatuses requiring multiple stages may also be used, such as an apparatus using two or more hot rolls or an apparatus using a plurality of pairs of a preheating device and a hot roll. The thermoplastic resin forming each sheet may not necessarily be of a single type. One or more sheets of different types of thermoplastic resin may be further stacked using such an apparatus as described above.

Another example of a method for producing a prepreg is a method of blending reinforcing fibers (b1) obtained by spreading a bundle of reinforcing fibers (b1) with a fibrous thermoplastic resin (b2) at a desired mass ratio to form sheets, layering the sheets on top of each other to obtain a no-woven fabric, and then applying heat and pressure to the non-woven fabric. Any commercially available fiber blender can be used for the fiber blending. A carding method can be used for forming sheets and layering them and any commercially available carding machine can be used for the carding method. Any known apparatus for applying heat and pressure can be used. The average fiber length of the fibrous thermoplastic resin (b2) for use in producing a non-woven fabric may be approximately the same as that of the reinforcing fibers (b1) to be blended together and the fineness thereof is preferably 2.2 dtex to 22 dtex. When the fineness is 2.2 to 22 dtex, the dispersibility of the reinforcing fibers (b1) and the fibrous thermoplastic resin (b2) can be improved, so that a more even non-woven fabric can be easily formed. Furthermore, from the viewpoint of further reducing a phenomenon where a sheet expands in a thickness direction during production of a green body using a prepreg, the number of scars in the prepreg by a needle puncher commonly used in fiber blending is preferably five or less per square centimeter. Moreover, the number of reinforcing fibers (b1) in each of which a portion is displaced 1 mm or more from another portion in the thickness direction of the prepreg in a cross-section of the prepreg is preferably 80 or less per square centimeter.

The temperature of heat applied is, depending on the type of the thermoplastic resin (b2), normally preferably 100°C to 400°C. The pressure applied is normally preferably 0.1 MPa to 10 MPa. When the temperature and pressure applied are within the above ranges, this is preferred because the thermoplastic resin (b2) can further penetrate between the reinforcing fibers (b1) contained in the prepreg.

Regarding the prepreg containing the reinforcing fibers (b1) and the thermoplastic resin (b2), when the reinforcing fibers (b1) are continuous fibers oriented in a single direction, the prepreg that can be used for the composite laminate according to the present invention is preferably obtained by making incisions therein with a laser marker, a cutting plotter, a punching die or the like. The reinforcing fibers (b1) are cut by making the incisions, in which case, in view of mechano-physical properties and fluidity, the length of cut reinforcing fibers (b1) is preferably 5 mm to 100 mm and more preferably 10 mm to 50 mm.

A layered base material may be made by stacking the two or more prepregs obtained in the above manner so that the directions of the reinforcing fibers (b1) are quasi-isotropic or alternated. The layered base material is preferably obtained by stacking the prepregs in 4 to 96 layers. The more preferred range of prepreg layers is 8 to 32. The above range is preferred because eight or more prepreg layers enable provision of a stack in which the directions of reinforcing fibers are quasi-isotropic and because thirty-two or less prepreg layers enable further reduction in workload in the stacking process.

The sheet (b3) may be produced by applying heat and pressure to the layered base material obtained in the above manner to mold an integrated layered base material. In doing so, when the film (a3) is disposed between the layered base material and a mold of a press, a composite laminate according to the present invention can be produced concurrently with the production of the sheet (b3) . After the heat application process, a cooling process is preferably performed. By the cooling, the thermoplastic resin is solidified, so that the sheet (b3) can be more easily handled.

During the application of heat, the layered base material is heated, depending on the type of the thermoplastic resin (b2) contained in the prepregs, preferably at 100°C to 400°C and more preferably at 150°C to 350°C. In addition, prior to the application of heat, preheating may be performed. The preheating is normally performed at 150°C to 400°C and preferably at 200°C to 380°C.

The pressure applied to the layered base material during the above application of pressure is preferably 0.1 MPa to 10 MPa and more preferably 0.2 MPa to 2 MPa. Each of these values of the pressure is a value obtained by dividing the pressing force by the area of the layered base material.

The time of application of heat and pressure is preferably 0.1 minutes to 30 minutes and more preferably 0.5 minutes to 20 minutes. The time of cooling set after the application of heat and pressure is preferably 0.5 minutes to 30 minutes.

The thickness of the sheet (b3) integrally formed by the above molding can be arbitrarily selected depending on the shape of a desired member and is, in view of moldability and mechano-physical properties, preferably 0.3 mm to 15 mm and more preferably 1 mm to 12 mm.

### <Method for Producing Composite Laminate>

The composite laminate according to the present invention can be produced by disposing the film (a3) on one or both sides of the sheet (b3) to form a layered stack so that the film (a3) is disposed between the sheet (b3) and a mold, and applying heat and pressure to the obtained stack with a molding machine to integrate the film (a3) and the sheet (b3). Alternatively, two or more (preferably, two to five) films (a3) may be disposed on one or both sides of the sheet (b3) to form a layered stack. After the heat application process, a cooling process is preferably performed. By the cooling, the thermoplastic resin is solidified, so that the composite laminate can be easily handled.

During the application of heat to the stack, the stack is heated, depending on the type of the thermoplastic resin (a2) contained in the film (a3) and the type of the thermoplastic resin (b2) contained in the sheet (b3), preferably at 100°C to 400°C and more preferably at 150°C to 350°C. In addition, prior to the application of heat, preheating may be performed. The preheating is normally performed at 150°C to 400°C and preferably at 200°C to 380°C.

The pressure applied to the stack during the above application of pressure is preferably 0.1 MPa to 10 MPa and more preferably 0.2 MPa to 2 MPa. Each of these values of the pressure is a value obtained by dividing the pressing force by the area of the stack.

The time of application of heat and pressure is preferably 0.1 minutes to 30 minutes and more preferably 0.5 minutes to 20 minutes. The time of cooling set after the application of heat and pressure is preferably 0.5 minutes to 30 minutes.

The mold temperature (Th) of the molding machine during the application of heat is, if the thermoplastic resin contained in the stack has a melting point (Tm), preferably Tm ≤ Th ≤ (Tm + 100) (°C) and more preferably (Tm + 10) ≤ Th ≤ (Tm + 80) (°C). The mold temperature (Th) of the molding machine during the application of heat is, if the thermoplastic resin contained in the stack has no melting point (Tm) but has a glass transition temperature (Tg), preferably Tg ≤ Th ≤ (Tg + 100) (°C) and more preferably (Tg + 10) ≤ Th ≤ (Tg + 80) (°C). When the mold temperature (Th) of the molding machine is within the above range, the stack can be integrated while the expansion of the mold can be prevented and while the deterioration of the resin can be reduced.

The difference (Th - Tc) between the mold temperature (Th) of the molding machine during application of heat and the mold temperature (Tc) thereof during cooling of the stack is preferably 10 ≤ (Th - Tc) ≤ 250 (°C) and more preferably 30 ≤ (Th - Tc) ≤ 200 (°C). When the difference between both the mold temperatures is within the above range, the thermoplastic resin can be more evenly melted and solidified, so that the obtained composite laminate can be further increased in durability.

A thermoplastic resin containing large-sized reinforcing fibers, as in the B layer of the composite laminate according to the present invention, generally develops sink marks by press molding. However, in the composite laminate according to the present invention, it can be considered that by forming the A layer containing the spherical particles (a1), which are microparticles, on the surface of the B layer, the spherical particles (a1) fill the gaps between the reinforcing fibers (b1), thus increasing the surface smoothness and mechano-physical properties.

In the composite laminate according to the present invention, it can also be considered that effects obtained by forming the A layer containing the spherical particles (a1) on the surface of the composite laminate, including the nucleating effect of the spherical particles (a1) on the thermoplastic resin (a2), reduced sticking of the spherical particles (a1) to the mold, and increased high-temperature rigidity due to the spherical particles (a1), increase the releasability from the mold.

Since the A layer containing the spherical particles (a1) is formed on the surface of the composite laminate according to the present invention, it can be expected that the existence of hydroxyl groups or the like on the surfaces of the spherical particles (a1) increases the adhesion of coating to the composite laminate.

Since the composite laminate according to the present invention has the above features, it can be used as a preform for molding that can be given an arbitrary shape by press molding, such as stamping molding and, therefore, can be given the shapes of various parts, components, and members of motor vehicles, electric and electronic devices (such as a personal computer housing and a tablet computer), and so on.

### Examples

Hereinafter, a detailed description will be given of the present invention with reference to working examples and comparative examples, but the present invention is not at all limited to these examples. Specific raw materials used in the working examples and comparative examples are as follows.

### (Spherical Particles (a1))

Spherical Silica (trade name: SC2500-SEJ manufactured by Admatechs Company Limited, amorphous silica, spherical particles, volume mean particle diameter: 0.6 µm, specific surface area: 6.0 m²/g, surface treatment agent: 3-glycidoxypropyltrimethoxysilane)

### (Thermoplastic Resin (a2))

Polyamide MXD10 resin (trade name: LEXTER 8500 manufactured by Mitsubishi Gas Chemical Company, Inc.)

### <Test Example 1 to Test Example 3>

Materials were melt-kneaded in each composition ratio shown in Table 1 using a biaxial extruder, thus producing pellets. The cylinder temperature of the biaxial extruder was 240°C.

The obtained pellets were injection molded to make a JIS test piece (bending test piece). The cylinder temperature of the injection molder was 240°C and the mold temperature was 110°C. The made bending test pieces were subjected to a 60 mm-span three-point bending test with a tester Autograph AG-5000 (manufactured by Shimadzu Corporation) in conformity with JIS K7171 to measure their flexural strengths and flexural moduli of elasticity. The results are shown in Table 1.

The obtained pellets were dried, then melted in a film extruder (manufactured by Toyo Seiki Seisaku-sho, Ltd., a connection of LABO PLASTOMILL 4C150-01 with a uniaxial extruder D2020 (L/D = 20)) at a cylinder temperature of 240°C, and extruded as a molten resin from a T-die (width: 150 mm, thickness: 0.2 mm), and the extruded molten resin was uniaxially stretched through a film drawer so that a resultant film had a desired thickness, thus obtaining a film. The thickness of the films was set at 100 µm.

**[Table 1]**

| | | | Test Ex. 1 | Test Ex. 2 | Test Ex. 3 |
|---|---|---|---|---|---|
| Content of Compounding Ingredient (% by mass) | Spherical particles(a1) | Spherical silica | 10 | 15 | |
| | Thermoplastic resin(a2) | Polyamide MXD10 resin | 90 | 85 | 100 |
| Mechano-Physical Properties | | Flexural strength (MPa) | 135 | 137 | 111 |
| | | Flexural modulus (GPa) | 3.2 | 3.4 | 4.7 |

### <Example 1, Example 2, Comparative Example 1, and Comparative Example 2>

### (Mold Releasability)

For each of the above obtained films in Test Examples 1 to 3, three films, 10 carbon fiber sheets (sheet thickness: 3 mm, content of carbon fibers: 51% by mass) made of carbon fibers (average fiber length: 70 mm, average fiber diameter: 7 µm) impregnated with polyamide 6 resin, three films, and a metallic plate (steel SS400, 600-grit finished) were stacked in this order on a metallic plate (steel SS400, 2000-grit finished), and the stack was pressed with a pressing machine (manufactured by Hoden Seimitsu Kako Kenkyusho Co., Ltd., trade name: ZENFormer 75t , double slide machine) under conditions of a top plate temperature of 270°C, a preheating time of 15 minutes, a pressure of 7 MPa, and a pressing time of one minute. After the pressing, the stack was cooled to room temperature and the top plate was lifted up to peel off the stack from the metallic plate. A stack pressed under the same conditions except that no film was inserted was used as Comparative Example 2.

The composite laminate completely peeled off from the metallic plate (steel SS400, 2000-grit finished) was evaluated as grade "A", the composite laminate partly left on the metallic plate was evaluated as grade "B", and the composite laminate not peeled off from the metallic plate was evaluated as grade "C". The results are shown in Table 2.

### (Evaluation of Maximum Height (Sz))

For each of the above obtained films in Test Examples 1 to 3, two films and a carbon fiber sheet (sheet thickness: 3 mm, content of carbon fibers: 51% by mass) made of carbon fibers (average fiber length: 70 mm, average fiber diameter: 7 µm) impregnated with polyamide 6 resin were clamped in a pressing machine (manufactured by Hoden Seimitsu Kako Kenkyusho Co., Ltd., trade name: ZENFormer 75t , double slide machine) to have a structure of the film/the carbon fiber sheet/the film and pressed with the pressing machine under conditions of a top plate temperature of 270°C, a preheating time of 15 minutes, a pressure of 7 MPa, and a pressing time of one minute. After the pressing, the stack was cooled to room temperature and the top plate was lifted up to peel off the stack from the metallic plate, thus producing a composite laminate. The total thickness of the A layer of the obtained composite laminate was 135 µm and the thickness of the B layer thereof was 2.5 mm. A stack pressed under the same conditions except that no film was inserted was used as Comparative Example 2.

The surface (A layer side) of the obtained composite laminate was measured in terms of maximum height (Sz) in conformity with ISO 25178 using a laser microscope (manufactured by Keyence Corporation, trade name: VK-X250). The composite laminate having a maximum height (Sz) of less than 70 µm was evaluated as grade "A", the composite laminate having a maximum height (Sz) of not less than 70 µm and less than 100 µm was evaluated as grade "B", and the composite laminate having a maximum height (Sz) of not less than 100 µm was evaluated as grade "C". The results are shown in Table 2.

### (Mechano-Physical Properties)

The composite laminates used for the evaluation of the maximum heights (Sz) were cut into a shape of a JIS test piece (bending test piece) by an abrasive waterjet cutter. The cutting conditions were as follows: a nozzle diameter ϕ of 0.76 mm, a water pressure of 400 MPa, a cutting speed of 200 mm/min, an amount of water of about 2.5 L/min, and an amount of abrasive (garnet #80) used of 400 g/min. The cutting was performed so that the lengthwise direction of the bending test piece coincided with the direction of drawing of films in Test Examples 1 to 3.

The obtained bending test pieces were subjected to a 60 mm-span three-point bending test with a tester Autograph AG-5000 (manufactured by Shimadzu Corporation) in conformity with JIS K7171 to measure their flexural strengths and flexural moduli of elasticity. The results are shown in Table 2.

**[Table 2]**

| | | | | Example 1 | Example 2 | Comp. Ex.1 | Comp. Ex.2 |
|---|---|---|---|---|---|---|---|
| A Layer | Material Film | | | Test Ex. 1 | Test Ex. 2 | Test Ex. 3 | - |
| | Content of Compounding Ingredient (% by mass) | Spherical particles(a1) | Spherical silica | 10 | 15 | | |
| | | Thermoplastic resin (a2) | Polyamide MXD10 resin | 90 | 85 | 100 | |
| B Layer | Content of Compounding Ingredient (% by mass) | Reinforcing fibers (b1) | Carbon fibers | 51 | 51 | 51 | 51 |
| | | Thermoplastic resin(b2) | PA 6 resin | 49 | 49 | 49 | 49 |
| Mold Releasability | | | | A | A | C | C |
| Maximum HeightSz | | | | A | A | B | C |
| Mechano-Physical Properties | | Flexural strength (MPa) | | 283 | 294 | 257 | 255 |
| | | Flexural modulus (GPa) | | 10.8 | 13.0 | 10.9 | 10.4 |

It can be seen from Test Examples 1 and 2 having the same composition as a structure formed only of the A layer that spherical particles increase the mechano-physical properties, but the structure formed only of the A layer had lower mechano-physical properties than Comparative Example 2 having a structure formed only of the B layer. Furthermore, since the total thickness of the A layer is as extremely small as 1/10 or less of the thickness of the B layer, it can be expected that the A layer does not contribute to an improvement in the mechano-physical properties of the composite laminate. Nevertheless, it was found that Examples 1 and 2 which were composite laminates formed of the A layer containing spherical particles and the B layer achieved an unexpected effect that the mechano-physical properties largely increased as compared to Comparative Example 1 which was a composite laminate formed of the A layer containing no spherical particles and the B layer.

### Reference Signs List

1, 21 ... composite laminate
2 ... A layer
3 ... B layer
3a ... first principal surface
3b ... second principal surface

## Claims

1. A composite laminate (1, 21) comprising an A layer (2) and a B layer (3), the A layer (2) being provided directly or indirectly on one or both sides of the B layer (3), the A layer (2) containing spherical particles (a1) with a volume mean particle diameter of 0.01 µm to 100 µm and a thermoplastic resin (a2), the B layer (3) containing reinforcing fibers (b1) with an average fiber length of 1 mm or more and a thermoplastic resin (b2),
wherein the spherical particles (a1) are at least one material selected from the group consisting of silica, alumina, and glass beads.

2. The composite laminate (1, 21) according to claim 1,
wherein the spherical particles (a1) are silica.

3. The composite laminate (1, 21) according to claim 1 or 2, wherein the thermoplastic resin (a2) is at least one selected from the group consisting of polyolefin resin, polystyrene-based resin, polyester-based resin, aliphatic polyamide resin, semi-aromatic polyamide resin, polyphenylene sulfide resin, polyether sulfone resin, aromatic polyether ketone resin, polyetherimide resin, and thermoplastic polyimide resin.

4. The composite laminate (1, 21) according to any one of claims 1 to 3, wherein a content of the spherical particles (a1) is 0.5% by mass to 30% by mass in a total amount of 100% by mass of all components contained in the A layer (2).

5. The composite laminate (1, 21) according to any one of claims 1 to 4, wherein the A layer (2) has a thickness of less than 500 µm.

6. The composite laminate (1, 21) according to any one of claims 1 to 5, wherein the reinforcing fibers (b1) are at least one type of fibers selected from the group consisting of carbon fibers, glass fibers, and aramid fibers.

7. The composite laminate (1, 21) according to any one of claims 1 to 6, wherein a content of the reinforcing fibers (b1) is 10% by mass to 80% by mass in a total amount of 100% by mass of all components contained in the B layer (3).

8. The composite laminate (1, 21) according to any one of claims 1 to 7, wherein the thermoplastic resin (b2) is at least one selected from the group consisting of polyolefin resin, polystyrene-based resin, polyester-based resin, aliphatic polyamide resin, semi-aromatic polyamide resin, polyphenylene sulfide resin, polyether sulfone resin, aromatic polyether ketone resin, polyetherimide resin, and thermoplastic polyimide resin.

9. The composite laminate (1, 21) according to any one of claims 1 to 8, wherein the B layer (3) has a thickness of 0.3 mm or more.

10. The composite laminate (1, 21) according to any one of claims 1 to 9, being used for motor vehicle members or electric and electronic components.

11. A method for producing the composite laminate (1, 21) according to any one of claims 1 to 10, the method comprising: disposing a film (a3) containing spherical particles (a1) with a volume mean particle diameter of 0.01 µm to 100 µm and a thermoplastic resin (a2) on one or both sides of a sheet (b3) containing reinforcing fibers (b1) with an average fiber length of 1 mm or more and a thermoplastic resin (b2) to form a layered stack of the film (a3) and the sheet (b3); and applying heat and pressure to the layered stack to integrate the sheet (b3) and the film (a3).

## Patentansprüche

1. Verbundlaminat (1, 21), umfassend eine A-Schicht (2) und eine B-Schicht (3), wobei die A-Schicht (2) direkt oder indirekt auf einer oder beiden Seiten der B-Schicht (3) vorgesehen ist, wobei die A-Schicht (2) kugelförmige Partikel (a1) mit einem volumenmittleren Partikeldurchmesser von 0,01 µm bis 100 µm und ein thermoplastisches Harz (a2) enthält, wobei die B-Schicht (3) Verstärkungsfasern (b1) mit einer durchschnittlichen Faserlänge von 1 mm oder mehr und ein thermoplastisches Harz (b2) enthält,
wobei die kugelförmigen Partikel (a1) mindestens ein Material sind, ausgewählt aus der Gruppe bestehend aus Siliciumdioxid, Aluminiumoxid und Glasperlen.

2. Verbundlaminat (1, 21) gemäß Anspruch 1, wobei die kugelförmigen Partikel (a1) Siliciumdioxid sind.

3. Verbundlaminat (1, 21) gemäß Anspruch 1 oder 2, wobei das thermoplastische Harz (a2) mindestens eines, ausgewählt aus der Gruppe bestehend aus Polyolefinharz, Harz auf Polystyrolbasis, Harz auf Polyesterbasis, aliphatischem Polyamidharz, semiaromatischem Polyamidharz, Polyphenylensulfidharz, Polyethersulfonharz, aromatischem Polyetherketonharz, Polyetherimidharz und thermoplastischem Polyimidharz, ist.

4. Verbundlaminat (1, 21) gemäß einem der Ansprüche 1 bis 3, wobei der Gehalt an kugelförmigen Partikeln (a1) 0,5 Masse-% bis 30 Masse-% der Gesamtmenge von 100 Masse-% aller in der A-Schicht (2) enthaltenen Komponenten beträgt.

5. Verbundlaminat (1, 21) gemäß einem der Ansprüche 1 bis 4, wobei die A-Schicht (2) eine Dicke von weniger als 500 µm aufweist.

6. Verbundlaminat (1, 21) gemäß einem der Ansprüche 1 bis 5, wobei die Verstärkungsfasern (b1) mindestens ein Fasertyp, ausgewählt aus der Gruppe bestehend aus Kohlenstofffasern, Glasfasern und Aramidfasern, sind.

7. Verbundlaminat (1, 21) gemäß einem der Ansprüche 1 bis 6, wobei der Gehalt an Verstärkungsfasern (b1) 10 Masse-% bis 80 Masse-% der Gesamtmenge von 100 Masse-% aller in der B-Schicht (3) enthaltenen Komponenten beträgt.

8. Verbundlaminat (1, 21) gemäß einem der Ansprüche 1 bis 7, wobei das thermoplastische Harz (b2) mindestens eines, ausgewählt aus der Gruppe bestehend aus Polyolefinharz, Harz auf Polystyrolbasis, Harz auf Polyesterbasis, aliphatischem Polyamidharz, semiaromatischem Polyamidharz, Polyphenylensulfidharz, Polyethersulfonharz, aromatischem Polyetherketonharz, Polyetherimidharz und thermoplastischem Polyimidharz, ist.

9. Verbundlaminat (1, 21) gemäß einem der Ansprüche 1 bis 8, wobei die B-Schicht (3) eine Dicke von 0,3 mm oder mehr aufweist.

10. Verbundlaminat (1, 21) gemäß einem der Ansprüche 1 bis 9, das für Kraftfahrzeugteile oder elektrische und elektronische Komponenten verwendet wird.

11. Verfahren zur Herstellung des Verbundlaminats (1, 21) gemäß einem der Ansprüche 1 bis 10, wobei das Verfahren umfasst: Aufbringen einer Folie (a3), die kugelförmige Partikel (a1) mit einem volumenmittleren Partikeldurchmesser von 0,01 µm bis 100 µm und ein thermoplastisches Harz (a2) enthält, auf eine oder beide Seiten einer Platte (b3), die Verstärkungsfasern (b1) mit einer durchschnittlichen Faserlänge von 1 mm oder mehr und ein thermoplastisches Harz (b2) enthält, um einen geschichteten Stapel aus der Folie (a3) und der Platte (b3) zu bilden; und Anwenden von Wärme und Druck auf den geschichteten Stapel, um die Platte (b3) und die Folie (a3) zu verbinden.

## Revendications

1. Stratifié composite (1, 21) comportant une couche A (2) et une couche B (3), la couche A (2) étant disposée directement ou indirectement sur un côté ou sur les deux côtés de la couche B (3), la couche A (2) contenant des particules sphériques (a1) ayant un diamètre de particule moyen en volume de 0,01 µm à 100 µm et une résine thermoplastique (a2), la couche B (3) contenant des fibres de renforcement (b1) ayant une longueur de fibre moyenne de 1 mm ou plus et une résine thermoplastique (b2),
dans lequel les particules sphériques (a1) sont au moins un matériau choisi parmi le groupe constitué de silice, d'alumine et de billes de verre.

2. Stratifié composite (1, 21) selon la revendication 1, dans lequel les particules sphériques (a1) sont de la silice.

3. Stratifié composite (1, 21) selon la revendication 1 ou 2, dans lequel la résine thermoplastique (a2) est au moins une résine choisie parmi le groupe constitué d'une résine de polyoléfine, d'une résine à base de polystyrène, d'une résine à base de polyester, d'une résine de polyamide aliphatique, d'une résine de polyamide semi-aromatique, d'une résine de sulfure de polyphénylène, d'une résine de polyéther sulfone, d'une résine de polyéther cétone aromatique, d'une résine de polyétherimide et d'une résine de polyimide thermoplastique.

4. Stratifié composite (1, 21) selon l'une quelconque des revendications 1 à 3, dans lequel une teneur en particules sphériques (a1) est de 0,5 % en masse à 30 % en masse en une quantité totale de 100 % en masse de tous les composants contenus dans la couche A (2).

5. Stratifié composite (1, 21) selon l'une quelconque des revendications 1 à 4, dans lequel la couche A (2) a une épaisseur inférieure à 500 µm.

6. Stratifié composite (1, 21) selon l'une quelconque des revendications 1 à 5, dans lequel les fibres de renforcement (b1) sont au moins un type de fibres choisi parmi le groupe constitué de fibres de carbone, de fibres de verre et de fibres d'aramide.

7. Stratifié composite (1, 21) selon l'une quelconque des revendications 1 à 6, dans lequel une teneur en fibres de renforcement (b1) est de 10 % en masse à 80 % en masse dans une quantité totale de 100 % en masse de tous les composants contenus dans la couche B (3).

8. Stratifié composite (1, 21) selon l'une quelconque des revendications 1 à 7, dans lequel la résine thermoplastique (b2) est au moins une résine choisie parmi le groupe constitué d'une résine de polyoléfine, d'une résine à base de polystyrène, d'une résine à base de polyester, d'une résine de polyamide aliphatique, d'une résine de polyamide semi-aromatique, d'une résine de sulfure de polyphénylène, d'une résine de polyéther sulfone, d'une résine de polyéther cétone aromatique, d'une résine de polyétherimide et d'une résine de polyimide thermoplastique.

9. Stratifié composite (1, 21) selon l'une quelconque des revendications 1 à 8, dans lequel la couche B (3) a une épaisseur de 0,3 mm ou plus.

10. Stratifié composite (1, 21) selon l'une quelconque des revendications 1 à 9, utilisé pour des éléments de véhicule à moteur ou des composants électriques et électroniques.

11. Procédé pour produire le stratifié composite (1, 21) selon l'une quelconque des revendications 1 à 10, le procédé comportant de : disposer un film (a3) contenant des particules sphériques (a1) ayant un diamètre de particule moyen en volume de 0,01 µm à 100 µm et une résine thermoplastique (a2) sur un côté ou sur les deux côtés d'une feuille (b3) contenant des fibres de renforcement (b1) ayant une longueur de fibre moyenne de 1 mm ou plus et une résine thermoplastique (b2) pour former un empilement de ouches du film (a3) et de la feuille (b3) ; et appliquer de la chaleur et une pression à l'empilement de couches pour intégrer la feuille (b3) et le film (a3).
